# EUROPEAN PATENT APPLICATION

(11) **EP 4 166 603 A1**
(43) Date of publication of application: **19.04.2023**
(21) Application number: 22201443.3
(22) Date of filing: 13.10.2022
(51) Int. Cl.: C08K 3/013, C09D 5/08, C09D 183/04, C08K 3/08

(54) **WATER BASED SILICONE COATING COMPOSITIONS**

(30) Priority: 13.10.2021 US 202163255066 P
(71) Applicant: Hamilton Sundstrand Corporation, Charlotte, NC 28217-4578 (US)
(72) Inventor: BORDAGE, Kevin R., Feeding Hills, MA 01030 (US)
(74) Representative: Dehns

(57) **Abstract**

A water based silicone coating includes: a water soluble ionic surfactant, water, a leafing pigment and a silicone resin emulsion.

## Description

### BACKGROUND

Exemplary embodiments pertain to the art of coatings. More particularly embodiments relate to water-based silicone coating compositions that offer superior coating properties, resistance to high temperatures and to the effects of corrosive environments and durability.

Silicone resins are known to demonstrate endurance towards environmental conditions such as weathering and extreme heat and cold. For this reason these resins have been found to be particularly useful in the paint industry.

The current high temperature aluminum-silicone heat exchanger coating is used on products subjected to high operational temperatures which require good corrosion resistance. In such cases, one approach is to provide a coating formed of a silicone resin emulsion; a non-water reactive filler material having a laminar structure (e.g., an aluminum pigment); a water-soluble nonionic surfactant; and water.

### BRIEF DESCRIPTION

Disclosed is a water-based silicone coating composition. In one embodiment, the composition includes: a. from about 39.6 to about 67.3% by weight of a silicone resin emulsion; b. from about 8.3 to about 19.2% by weight of a leafing pigment having a laminar structure; c. from about 0.05 to about 3.0% by weight of a water-soluble ionic surfactant; and d. from about 10.5 to about 52.0% by weight of water. In this embodiment, the sum of components a, b, c and d total 100% by weight.

In addition to one or more of the features described above, or as an alternative to any of the foregoing embodiments, the leafing pigment has cornflake shaped particles with rough irregular edges.

In addition to one or more of the features described above, or as an alternative to any of the foregoing embodiments, the cornflake shaped particles are formed of aluminum.

In addition to one or more of the features described above, or as an alternative to any of the foregoing embodiments, the cornflake shaped particles have a size contained within the range of 13 - 20 microns.

In addition to one or more of the features described above, or as an alternative to any of the foregoing embodiments, the ionic surfactant is a cationic surfactant.

In addition to one or more of the features described above, or as an alternative to any of the foregoing embodiments, the surfactant is an ammonium salt of polycarboxylic acid.

In addition to one or more of the features described above, or as an alternative to any of the foregoing embodiments, the ionic surfactant is a cationic surfactant.

In addition to one or more of the features described above, or as an alternative to any of the foregoing embodiments, the surfactant is an ammonium salt of polycarboxylic acid.

Also disclosed is a method of forming a water-based silicone coating composition. The method includes: a. blending water and a water soluble ionic surfactant and allowing said surfactant to dissolve to form a water solution; b. adding a leafing pigment to the water solution and allowing the leafing pigment to fully disperse to form a dispersion; c. blending a silicone resin emulsion and water to form a diluted emulsion and allowing the diluted emulsion to fully dissolve; and d. adding the dispersion to the dissolved diluted emulsion to form an admixture and allowing the admixture to fully disperse.

In addition to one or more of the features described above related to the method, or as an alternative to any of the foregoing embodiments, the leafing pigment has cornflake shaped particles with rough irregular edges.

In addition to one or more of the features described above related to the method, or as an alternative to any of the foregoing embodiments, the cornflake shaped particles are formed of aluminum.

In addition to one or more of the features described above related to the method, or as an alternative to any of the foregoing embodiments, wherein the cornflake shaped particles have a size contained within the range of 13 - 20 microns.

In addition to one or more of the features described above related to the method, or as an alternative to any of the foregoing embodiments, the ionic surfactant is a cationic surfactant.

In addition to one or more of the features described above related to the method, or as an alternative to any of the foregoing embodiments, the surfactant is an ammonium salt of polycarboxylic acid.

In addition to one or more of the features described above related to the method, or as an alternative to any of the foregoing embodiments, the ionic surfactant is a cationic surfactant.

In addition to one or more of the features described above related to the method, or as an alternative to any of the foregoing embodiments, wherein the surfactant is an ammonium salt of polycarboxylic acid.

### BRIEF DESCRIPTION OF THE DRAWING

The following descriptions should not be considered limiting in any way. With reference to the accompanying drawings, like elements are numbered alike and the FIGURE is an example of a coating system disposed on a substrate.

### DETAILED DESCRIPTION

A detailed description of one or more embodiments of the disclosed apparatus and method are presented herein by way of exemplification and not limitation with reference to the Figure.

To provide an alternative coating, another option is provided that uses a different formulation. In particular, in one embodiment, a coating composition is disclosed that includes a silicone resin emulsion; an aluminum leafing pigment; a water-soluble ionic surfactant; and water.

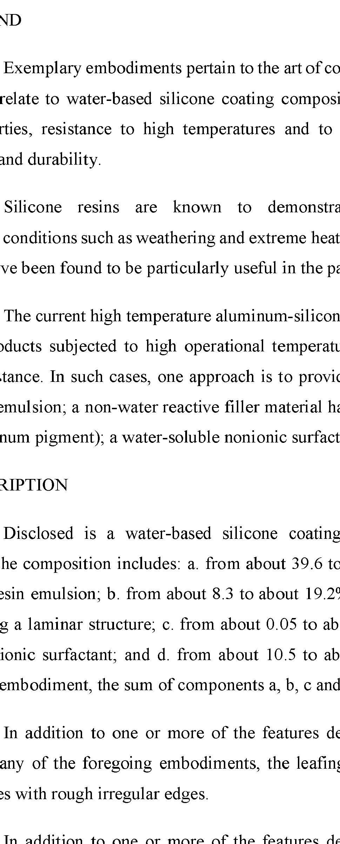

With reference to FIG. 1, a coating structure 100 is disclosed. The structure 100 is provided on and protects a substrate 102. In embodiments herein, the substrate 102 can be portion of a heat exchanger. Thus, in FIG. 1 a representative heat exchanger is indicated by dashed line 104 and can be included in as part of any embodiments disclosed or claimed herein.

The coating structure 100 includes a conversion coating layer 106 and a barrier 108. The barrier 108 can include one or more leafing pigment elements 110 disposed therein.

The conversion coating layer 106 can be optional and may be omitted. The conversion coating layer 106 can be formed by submerging the substrate in a chemical solution, with or without the application of electric current to the substrate 102.

As noted above, the barrier 108 can be formed such that it includes silicone resin emulsion; an aluminum leafing pigment; a water-soluble ionic surfactant; and water.

The emulsion functions as a high heat resistant binder for the pigment element and generally will have a total silicone resin solids content of approximately 38 to 82% by weight. The silicone resin emulsion is comprised of 100 parts by weight of (i) at least one silicone resin having one or more organic side groups attached such as phenyl, methyl, trifluoropropyl and/or vinyl moieties; (ii) an anionic surfactant effective for dispersing the resin in a water based emulsion and for binding the resin or particulate phase and the water or continuous phase; and (iii) an amount of water effective for providing a preselected silicone resin solids content by weight of the emulsion. The emulsion might also contain trace amounts of volatile organic compounds such as xylene and/or toluene present as a result of the manufacturing process.

Silicone resins, which may be used in the emulsion of the present inventive coating composition, include optionally crosslinked resins comprising units selected from the group consisting of Rₓ SiO_{y} where x is 3, 2 or 1 and y is 0.5, 1.0 or 1.5 respectively, and where the R groups are phenyl, methyl, trifluoropropyl and/or vinyl. Typical average molecular weight and weight average molecular weight of such resins are 420 and 2190, respectively. Preferred silicone resins include lightly crosslinked or soft phenylmethyl silicone resins and moderately to highly crosslinked or medium-hard phenylmethyl silicone resins. The most preferred silicone resin is medium-hard phenylmethyl silicone resin where an increase in the hardness and fluid resistance of the cured inventive coating composition has been observed when this moderately to highly crosslinked resin is used.

Embodiments herein utilize a new Al leafing pigment with the proper surfactant. In order to ensure the barrier coating 108 provides the most robust corrosion protection a new surfactant is coupled to a new pigment to create a resin system able to provide the necessary properties. This coating formulation provides the desired corrosion resistance, manufacturability, and cosmetic appearance needed for heat exchanger products.

In one embodiment, the surfactant is an ionic surfactant. For example, the surfactant can be a cationic surfactant. The surfactant can thus be an ammonium salt of polycarboxylic acid. A commercially available version of such a surfactant can by BYK-154 produced by BYK company and which is an ammonium polyacrylate-based dispersing additive for pigments.

The leafing pigment is cornflake shaped with rough irregular edges in one embodiment and can have a size contained within the range of 13 - 20 microns in diameter. The leafing pigment 110 generally has a laminar structure and functions to form a barrier from corrosive elements thereby protecting the substrate 102 and serves to improve coating properties. Filler materials contemplated by the present invention include pigments in the form of a paste containing flake metal. These pigments in addition to functioning as a barrier from corrosive elements and improving coating properties also impart color to the coating composition. Embodiments herein can utilize a VOC-free, aluminum-based metallic pigment. An example is produced by Shlenk and is commercially called Aquasilber LPW/2140.

This combination is not commercially available and was developed to solve not only the obsolescence issue but to augment corrosion resistance, hardness, and surface wetting.

Experimentation has shown that using a surfactant such as an ammonium salt of polycarboxylic acid provides better surface wetting and imparts better corrosion resistance for the substrate compared to non-ionic surfactants.

As compared to other waterborne systems that utilized pigments which required hydrocarbon solvents such as mineral spirits the current invention may not require that. As such, the pigment solution therefore lowers volatile organic compound (VOC) content of the coating system. In some instance using the disclosed materials can result in protection from high temperature corrosion, VOC reduction, and better surface wetting.

In one embodiment, the coating composition of the present invention comprises (i) from 39.6 to 67.3% by weight of a phenylmethyl silicone resin emulsion having a total weight percent silicone resin solids content of approximately 48 to 72%; (ii) from 8.3 to 19.2% by weight of inhibited aluminum leafing pigment (iii) from 0.05 to 3.0% by weight of water soluble ionic surfactant; and (iv) from 10.5 to 52.0% by weight water, and has a total weight percent solids content of approximately 24.4 to 50.0 %.

In addition to the above components, the present inventive coating composition may advantageously contain some or all of the following ingredients, including antifoams, pH buffers, anti-rust agents, biocides, fungicides, antifreeze agents, etc. However, some such additives may have an adverse effect on the coating's durability, corrosion resistance, coating properties and/or resistance to high temperatures.

In preparing the coating composition, water and surfactant are blended together and the surfactant is allowed to dissolve for at least thirty (30) minutes. The leafing pigment is then added to the resulting water solution. Dispersion of the filler material in the water solution is achieved by gentle agitation of the solution with a paddle to break apart the large agglomerates. This is followed by ensuring that the leafing pigment is completely covered by the water solution and allowing the filler material to fully disperse by soaking for approximately 24 to 72 hours. During this period, the dispersion is agitated at least twice per day. A letdown is then prepared by blending a silicone resin emulsion and water for approximately 15 to 20 minutes. The letdown is allowed to fully dissolve for approximately 24 to 72 hours. The dispersion is then added to the letdown and thoroughly blended. The resulting admixture is then allowed to fully disperse for at least 24 hours. As can be well understood by those skilled in the art, excessive stirring during preparation of the coating composition of the present invention is to be avoided.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the invention as defined by the claims. In addition, many modifications may be made to adapt a particular situation or material to the teachings of the present disclosure without departing from the scope of the claims. Therefore, it is intended that the present invention not be limited to the particular embodiment disclosed, but that the present invention will include all embodiments falling within the scope of the claims.

## Claims

1. A water-based silicone coating composition comprising:
a. from about 39.6 to about 67.3% by weight of a silicone resin emulsion;
b. from about 8.3 to about 19.2% by weight of a leafing pigment having a laminar structure;
c. from about 0.05 to about 3.0% by weight of a water soluble ionic surfactant; and
d. from about 10.5 to about 52.0% by weight of water,
wherein the sum of components a, b, c and d total 100% by weight.

2. The composition of claim 1, wherein leafing pigment has cornflake shaped particles with rough irregular edges.

3. The composition of claim 2, wherein the cornflake shaped -particles are formed of aluminum.

4. The composition of claim 3, wherein the cornflake shaped particles have a size contained within the range of 13 - 20 microns.

5. The composition of an preceding claim, wherein the ionic surfactant is a cationic surfactant.

6. The composition of claim 5, wherein the surfactant is an ammonium salt of polycarboxylic acid.

7. A method of forming a water-based silicone coating composition comprising:
a. blending water and a water-soluble ionic surfactant and allowing said surfactant to dissolve to form a water solution;
b. adding a leafing pigment to the water solution and allowing the leafing pigment to fully disperse to form a dispersion;
c. blending a silicone resin emulsion and water to form a diluted emulsion and allowing the diluted emulsion to fully dissolve; and
d. adding the dispersion to the dissolved diluted emulsion to form an admixture and allowing the admixture to fully disperse.

8. The method of claim 7, wherein leafing pigment has cornflake shaped particles with rough irregular edges.

9. The method of claim 8, wherein the cornflake shaped particles are formed of aluminum.

10. The method of claim 9, wherein the cornflake shaped particles have a size contained within the range of 13 - 20 microns.

11. The method of any of claims 7 to 10, wherein the ionic surfactant is a cationic surfactant.

12. The method of 11, wherein the surfactant is an ammonium salt of polycarboxylic acid.
